# EUROPÄISCHE PATENTSCHRIFT

(11) **EP 1 669 467 B1**
(45) Veröffentlichungstag und Bekanntmachung des Hinweises auf die Patenterteilung: **02.09.2009**
(21) Anmeldenummer: 05077855.4
(22) Anmeldetag: 09.12.2005
(51) Int. Cl.: C22B 7/00, C02F 11/00

(54) **Verfahren zur Abtrennung von Schwermetallen aus Klärschlammasche**
Process of removal of heavy metals from incinerated sewage sludge
Procédé de séparation de métaux lourds de boues de curage incinérées

(30) Priorität: 09.12.2004 DE 102004059935
(43) Veröffentlichungstag der Anmeldung: 14.06.2006
(73) Patentinhaber: BAM Bundesanstalt für Materialforschung und- Prüfung, 12205 Berlin (DE)
(72) Erfinder: Adam, Christian, Dr.-Ing., 13469 Berlin (DE); Kley, Gerd, Dr. rer. nat., 16727 Oberkrämer, OT Schwante (DE); Brenneis, Rudolf, Dr. rer. nat., 10315 Berlin (DE)
(74) Vertreter: Pfenning, Meinig & Partner GbR

(56) Entgegenhaltungen:
- DE-A1- 2 729 277
- DE-A1- 10 243 840
- DE-C1- 4 218 672
- US-A- 3 436 184
- US-A- 4 348 228
- PATENT ABSTRACTS OF JAPAN Bd. 1998, Nr. 13, 30. November 1998 (1998-11-30) & JP 10 202221 A (GOTO TATSUO), 4. August 1998 (1998-08-04)
- HULTMAN B, LEVLIN E, MOSSAKOWSKA A, STARK K: "Effects of wastewater treatment technology on phosphorus recovery from sludges and ashes" CONFERENCE ON RECOVERY OF PHOSPHATES FROM SEWAGE AND ANIMALS WASTE, NOORDWIJKERHOUT, NETHERLANDS, 12. März 2001 (2001-03-12), - 13. März 2001 (2001-03-13) XP001246749

## Beschreibung

Die Erfindung betrifft ein Verfahren nach dem Oberbegriff des Anspruchs 1.

Phosphor zählt zu den Hauptnährstoffen von Pflanzen. Der jährliche Bedarf von Kulturpflanzen beträgt bis zu 26 kg Phosphor pro Hektar. Dies hat zur Folge, dass mehr als 90 % der weltweit abgebauten Phosphate zu Phosphordüngemitteln verarbeitet werden. Phosphor steht global aber in begrenztem Umfang zur Verfügung.

Aus diesem Grund ist ein ressourcenschonender Umgang mit dem Rohstoff "Phosphor" erforderlich. Große Mengen dieses Elements werden jedoch dem Rohstoffkreislauf dadurch entzogen, dass phosphathaltige Stoffe deponiert werden oder in einem Umfeld zum Einsatz kommen, wo der Phosphorgehalt allenfalls toleriert, aber nicht zielgerichtet ausgenutzt wird.

Die defizitäre Situation hinsichtlich der langfristigen Phosphorverfügbarkeit führt dazu, dass Klärschlämme als Phosphordünger verwendet werden. Hiergegen bestehen jedoch starke Bedenken, da so behandelte landwirtschaftliche Flächen durch die im Klärschlamm enthaltenen Schadstoffe belastet bzw. Schwermetalle durch ihre Pflanzenverfügbarkeit in die Nahrungsmittelkette gelangen können. Persistente organische Verbindungen wie Pharmazeutika und Kunststoff-Weichmacher und dergleichen Stoffe können die Struktur der Böden verändern und zu heute oft unabsehbaren nachhaltig wirksamen Bodenveränderungen und Vergiftungen führen oder über diesen Pfad ins Grundwasser gelangen.

Andererseits gibt es zur Rückgewinnung von Phosphor und seinen Verbindungen aus Abwasser und Klärschlamm bereits eine Vielzahl von Verfahren, die auch schon in der Praxis eingesetzt werden. Dazu gehören:
- Ionenaustausch im Abwasserablauf von Kläranlagen
- Phosphorausfällung im Abwasserablauf von Kläranlagen
- Phosphor-Auskristallisation im Abwasserablauf
- Biologische Phosphor-Rücklösung und Fällung
- Sulfidische Phosphor-Rücklösung und Fällung
- Kombinierte Phosphor-/Stickstoffausfällung im Schlammfaulungs- oder Schlammpresswasser
- Phosphoradsorption an Aktivtonerde
- Saure Phosphor-Rücklösung und Fällung.
(Hultman, B.; Levlin, E.: Mossakowska, A.; Stark, K.: Effects of wastwater treatment technology on phosphorus recovery from sludges and ashes, Vortrag auf der "Conference on Recovery of phosphates from sewage and animals waste", Noordwijkerhout, Netherlands, 12.-13.03.2001; Ripl, W.; Stammert, B.; Wiesmann, U., Karimnia, M.; Rückgewinnung von Phosphor und Fällungsmitteln (Eisen) aus Nachfällschlamm, In: Vom Wasser, 70 (1995), S. 179-185; Svensson, A.: Fosfor ur avloppsslam - en studie av KREPRO-processen och Bio-Cons process ur ett livscykelperspektiv, Dissertation, Thesen, Kemisk miljövetenskap, Chalmers Tekniska Högskola 2000; Thomé-Kozmiensky, Karl-J. (Hrsg.): Verantwortungsbewusste Klärschlammverwertung - Vorträge und Konferenzbericht Berlin, 20./21.02.2001.)

Werden geeignete Fällungs-, Kristallisations- und Adsorptionsmittel eingesetzt, können so weitgehend schadstofffreie und hygienisch unbedenkliche Komponenten für phosphorhaltige Düngemittel gewonnen werden.

Bei den vorstehend genannten Verfahren handelt es sich um Vorgänge, bei denen große Massenströme zu bewältigen sind. Insbesondere die zunehmende Industrialisierung, auch in ländlichen Gebieten, die Verwendung von Arzneien, Kosmetika, Waschmitteln und dergleichen, die letztlich in meist unvorhersehbarer Weise ihren Niederschlag in Klärschlämmen finden, machen eine ordnungsgemäße Verwertung von Klärschlämmen schwierig. Auch ist es notwendig, etwaige Infektionskreisläufe zu durchbrechen, was durch eine Verbrennung des Klärschlamms erreicht werden kann. Durch einen geeigneten thermischen Prozess kann sichergestellt werden, dass vorhandene organische Schadstoffe und infektiöse Keime sowie andere hygienisch belastende Stoffe weitgehend zerstört werden. Bestimmte niedrigsiedende anorganische Schadstoffe können dem Prozess über die Gasphase entzogen werden.

Nach dem Verbrennen phosphathaltiger Abfallstoffe (Klärschlämme und ähnlich zusammengesetzte Abfälle) in Monoverbrennungsanlagen fallen phosphathaltige Aschen mit einem Phosphorgehalt im Bereich von 8 bis 20 % an, in denen die organischen Schadstoffe einschließlich endokriner Substanzen durch den Verbrennungsprozess weitgehend zerstört wurden. Die chemischen Hauptbestandteile der erhaltenen Klärschlammaschen sind SiO₂, CaO, Al₂O₃, Fe₂O₃ und P₂O₅. Je nach Art der bei der Klärschlammentwässerung eingesetzten Flockungshilfsmittel (Eisen- oder Aluminiumsalze bzw. CaO/Kalkmilch) lassen sich Fe-reiche, A1-reiche und Ca-reiche Aschen unterscheiden. Andere Elemente, z.B. die umweltrelevanten Schwermetalle Blei, Cadmium, Chrom, Kupfer, Nickel, Zink und Quecksilber, treten nur als Neben- oder Spurenkomponenten auf. Überschreiten diese Elemente jedoch die für sie in der Düngemittelverordnung festgelegten Grenzwerte, wird die Verwendung der Klärschlammasche als Landwirtschaftsdünger problematisch bzw. unzulässig. Gegenwärtig wird in Deutschland der größte Teil der anfallenden Klärschlammasche aus diesem Grunde unter Tage deponiert oder als Bergversatz eingesetzt. Damit wird der vorhandene Wertstoffanteil einer Nutzung entzogen.

Aus der DE 27 29 277 A1 ist ein Verfahren zur Behandlung von Schlämmen oder Aschen, die für Pflanzen schlecht verfügbare, mineralische Düngemittelkomponenten enthalten, bekannt, bei dem die Schlämme oder Aschen in Gegenwart von Aufschlussmitteln von Na₂CO₃, CaO, Ca(OH)₂, MgO und MgSO₄ einer Hochtemperaturbehandlung bei Temperaturen zwischen 600 und 1400°C unterzogen werden, wobei die für Pflanzen schlecht verfügbaren Düngemittelkomponenten in pflanzenverfügbare umgewandelt werden.

Weiterhin ist aus der DE 102 43 840 B4 ein Verfahren zur Abtrennung von umweltrelevanten Schwermetallen aus phosphorhaltiger Klärschlammasche bekannt, bei dem umweltverträgliche Metallchloride in die Asche gemischt werden und anschließend eine Erwärmung der Mischung über den Siedepunkt der sich bildenden Chloride der umweltrelevanten Schwermetalle erfolgt, so dass aus der Mischung gasförmige Schwermetallchloride austreten, welche getrennt aufgefangen werden.

Dieses Verfahren ist jedoch insofern nachteilig, als die Reaktionsatmosphäre nicht gezielt einstellbar und es für die Entfernung der Schwermetalle Arsen, Chrom und Nickel nicht geeignet ist.

Weiterhin beschreibt die JP 10 216 670 A ein zweistufiges Verfahren zur Entfernung von Schwermetallen aus Asche oder Flugasche, bei dem in der ersten Stufe die Asche/Flugasche bei einer Temperatur von weniger als 600°C einem bei der Verbrennung chlorhaltiger Abfälle erzeugten, chlorhaltigen Verbrennungsgas ausgesetzt wird, so dass die Schwermetalle in der Asche/Flugasche Schwermetallchloride bilden, und in der zweiten Stufe die Asche/Flugasche auf 1200°C erwärmt wird, so dass die flüchtigen Schwermetallchloride ausgetrieben werden. Zumindest in der zweiten Stufe ist die Asche/Flugasche einer Luftatmosphäre und damit Sauerstoff ausgesetzt. In dieser Atmosphäre sind die Schwermetallchloride und gegebenenfalls - oxi-chloride nicht stabil und reagieren teilweise mit dem Sauerstoff zu den entsprechenden, nicht flüchtigen Oxiden. Das Ausmaß der Oxidbildung hängt von dem jeweiligen Schwermetall sowie von dem Verhältnis der Sauerstoff- und Chlorpartikeldrücke zueinander ab.
Für Arsen, Chrom und Nickel beispielsweise erfolgt eine nahezu vollständige Umwandlung in Oxide, so dass diese Schwermetalle mit diesem Verfahren nicht entfernt werden können. Jedoch auch für weitere Metalle wie Kupfer, Blei, Zinn und Zink kann der Restgehalt noch relativ hoch sein.

Schließlich offenbart die DE 42 18 672 C1 ein Verfahren zum Verbrennen von Quecksilber und/oder Quecksilberverbindungen enthaltendem Klärschlamm und zum Auswaschen von Quecksilber und/oder Quecksilberverbindungen aus dem beim Verbrennen entstehenden Randgas. Insbesondere dann, wenn das Rauchgas einen niedrigen HCl- und einen hohen SO₂-Gehalt hat, ist jedoch die Abscheidung von Quecksilber aus dem Rauchgas sehr unvollständig. Daher werden, um die Abscheidung von Quecksilber zu erhöhen, dem Klärschlamm Chlor und/oder Chlorverbindungen zugegeben, was durch <Zuführen von Chlorgas oder gasförmigen Chlorverbindungen während des Verbrennens erfolgen kann.

Es ist daher die Aufgabe der vorliegenden Erfindung, ein Verfahren zur Abtrennung von Schwermetallen aus phosphathaltiger Klärschlammasche, die auf eine Temperatur oberhalb der Siedepunkte der Oxichloride oder Chloride der zu entfernenden Schwermetalle erwärmt wird, anzugeben, das einfach und gut regelbar ist und bei dem die behandelte Klärschlammasche deutlich weniger unerwünschten Schwermetallreste enthält.

Diese Aufgabe wird erfindungsgemäß gelöst durch ein Verfahren mit den Merkmalen des Anspruchs 1. Vorteilhafte Weiterbildungen des erfindungsgemäßen Verfahrens ergeben sich aus den Unteransprüchen.

Dadurch, dass die erwärmte Klärschlammasche mit einer Chlorgas enthaltenden, sauerstoffarmen Atmosphäre, in der das Volumenverhältnis von Cl₂ zu O₂ im Bereich zwischen 3:1 und 10:1 liegt, in Kontakt gebracht wird und die sich bildenden gasförmigen Oxichloride oder Chloride der Schmermetalle getrennt von der Klärschlammasche aufgefangen werden, können die umweltrelevanten Schwermetalle, insbesondere Blei, Cadmium, Chrom, Kupfer, Nickel, Zink und Quecksilber, deren Chloride überwiegend im Bereich zwischen 800°C und 1000°C verdampfen, aus dem Stoffstrom ausgeschleust werden. Die Erwärmung der Mischung erfolgt daher vorzugsweise auf eine Temperatur >850°C.

Durch den Kontakt der schwermetallhaltigen Klärschlammasche mit einer sauerstoffarmen Atmosphäre, bestehend aus Chlorgas und Luft bzw. Chlorgas und einem anderen Gas kommt es bei bestimmten Temperaturen zur Bildung der entsprechenden Chloride oder Oxichloride der Schwermetalle, welche bei Behandlungstemperaturen oberhalb deren Siedepunkte in den gasförmigen Zustand übergehen. Durch die geringen Sauerstoffkonzentrationen können auch die Chloride/Oxichloride insbesondere von Arsen, Chrom und Nickel stabilisiert und somit verdampft werden. Die gasförmigen Schwermetallverbindungen werden separat vom Hauptmassenstrom aufgefangen. Somit ergibt sich als Hauptmassenstrom ein phosphorhaltiges Produkt, das zu Düngemittelzwecken eingesetzt werden kann, sowie ein Schwermetallkonzentrat, das entsorgt oder einem Recyclingprozess unterzogen wird.

Das Verhältnis der Konzentrationen von Chlor und von Sauerstoff in der Chlorgas enthaltenden, sauerstoffarmen Atmosphäre wird vorzugsweise in Abhängigkeit davon eingestellt, welche Schwermetalle vorzugsweise aus der Klärschlammasche entfernt werden sollen. Für normale Klärschlammasche hat sich ein Verhältnis von etwa 5 Volumenanteilen Cl₂ zu 1 Volumenanteil O₂ als zweckmäßig erwiesen.

Die in der Klärschlammasche vorliegenden Phosphorverbindungen sind zum Teil für Pflanzen ungenügend verfügbar, da sie eine sehr geringe Wasserlöslichkeit sowie eine geringe Zitratlöslichkeit (in 2%iger Zitronensäure) aufweisen. Die Pflanzenverfügbarkeit des Phosphors kann durch Veränderungen der relevanten mineralischen Phasen signifikant erhöht werden. Eine weitergehende Verbesserung der Pflanzenverfügbarkeit des Phosphors kann durch eine gezielte Zugabe von festen Alkali- und Erdalkalicarbonaten und/oder Alkali- und Erdalkalioxiden vor der thermochemischen Behanderfolgen. Hierfür wird die Klärschlammasche in einem geeigneten Mischaggregat mit den genannten festen Zuschlagstoffen gemischt und anschließend der thermochemischen Behandlung zugeführt. Es kommt hierbei unter anderem zur Ausbildung von Alkali- und Erdalkaliphosphaten, wodurch die Pflanzenverfügbarkeit des Phosphors erhöht wird.

Durch die gezielte Einstellung der Reaktionsatmosphäre kann die Entfernung der Schwermetalle gesteuert werden. Dies ist auf die unterschiedliche Beständigkeit der Chloride und Oxichloride der jeweiligen Schwermetalle bei Vorliegen unterschiedlicher Verhältnisse der Chlor- bzw. Sauerstoffpartialdrücke zueinander zurückzuführen. Durch die Einstellung der Reaktionsatmosphäre können somit einige Schwermetalle als stabile Chloride oder Oxichloride in die Gasphase überführt und damit separiert werden, wohingegen andere Schwermetallverbindungen, deren Chloride oder Oxichloride bei der eingestellten Atmosphäre nicht beständig sind, im festen Ausgangsprodukt verbleiben.

Da die Schwermetalle in Klärschlammaschen als Nebenkomponenten auftreten, ist der Massenanteil des über die Gasphase abgeführten Reaktionsproduktes "Schwermetallchloridgemisch" gering. Dementsprechend ist der Verbrauch an Chlorgas gering, da dieses nur über die Schwermetallchloride aus dem System entfernt wird.

Die thermochemische Behandlung der Klärschlammasche nach dem vorliegenden Verfahren wird in geschlossenen Systemen durchgeführt. Die mit den entsprechenden Chloriden und Oxichloriden der Schwermetalle beladene Gasphase wird aus dem Reaktionsraum abgeführt und die Schwermetallverbindungen werden mit geeigneten Aggregaten aus der Gasphase auskondensiert und abgetrennt.

Die Gasphase wird anschließend wieder in den Reaktionsraum zurückgeführt. Hierdurch ist es möglich, dass die verbliebene Menge an Chlor wieder für die Reaktion bzw. die Einstellung der notwendigen Atmosphärenzusammensetzung eingesetzt werden kann. Der Verbrauch an Chlor beschränkt sich somit auf den mit dem Kondensat abgeführten Anteil.

Durch Auswahl und Kombination der genannten festen Zuschlagstoffe kann die Düngemittelzusammensetzung beeinflusst werden. Es können so z.B. Kaliumphosphat-, Magnesiumphosphat- und Kaliummagnesiumphosphatdünger hergestellt werden.

Die thermochemische Behandlung kann sowohl unterhalb als auch oberhalb der Schmelztemperatur des jeweiligen Reaktionsgemisches durchgeführt werden. Dem ersten Fall ist der Vorzug zu geben, da hier weniger Energie benötigt wird und der zusätzliche Schritt einer Aufbereitung (Mahlen) entfällt.

Eine Bildung von elementarem Phosphor durch die thermochemische Behandlung der Klärschlammasche kann ausgeschlossen werden.

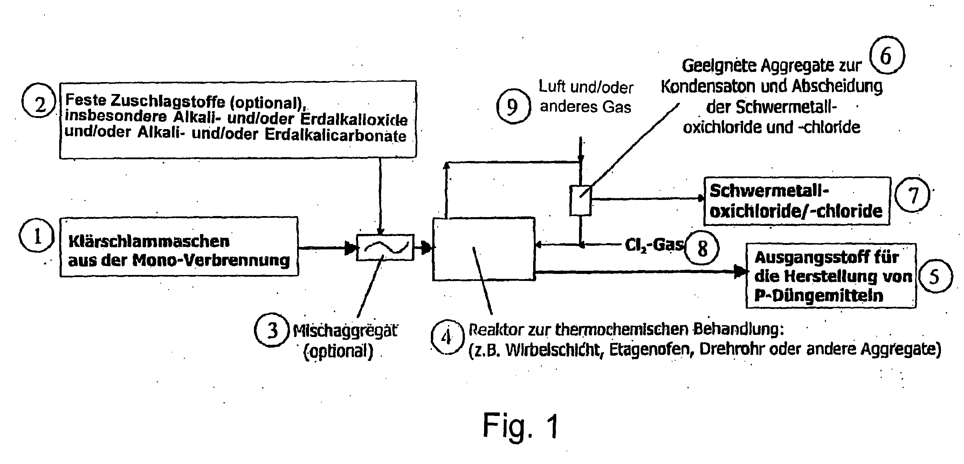

Die Erfindung wird im Folgenden anhand eines in der Figur dargestellten Ausführungsbeispiels näher erläutert. Diese zeigt eine Stoffflussskizze, die die Behandlung der Klärschlammasche nach dem vorliegenden Verfahren illustriert.

Einem Mischaggregat 3 werden Klärschlammasche 1 aus einer Monoverbrennung (nur Klärschlamm wurde verbrannt) und feste Zuschlagstoffe 2, insbesondere Alkali- und/oder Erdalkalioxide und/oder Alkali- und/oder Erdalkalicarbonate zugeführt.

Im Mischaggregat 3 findet eine intensive Durchmischung der Einsatzstoffe statt. Ist die Zudosierung von festen Zuschlagstoffen nicht vorgesehen, so entfällt das Mischaggregat 3. Das Gemisch aus dem Mischaggregat 3 oder die reine Klärschlammasche 1 werden in den Reaktor 4 überführt. Hier kommt es je nach angestrebtem Reinigungsziel und der Art und Belastung der Ausgangsstoffe bei Temperaturen >850°C zum Kontakt der festen Ausgangsstoffe mit einer chlorhaltigen Atmosphäre. Unter diesen Bedingungen bilden sich Chloride und Oxichloride der in der Klärschlammasche vorhandenen Schwermetalle und gehen zumindest teilweise in die Gasphase über. Die Gasphase wird kontinuierlich aus dem Reaktor 4 abgeführt und durch geeignete Aggregate 6 zur Kondensation und Abscheidung geleitet. Hier werden die entstandenen Schwermetallverbindungen 7 abgeschieden und somit dem Gasstrom entnommen. Das von den Schwermetallverbindungen abgereicherte Gas wird in den Reaktor 4 zurückgeführt. Zur Einstellung der für die thermochemische Reaktion und für die Stabilisierung der Oxichloride und Chloride der entsprechenden Schwermetalle notwendigen Atmosphäre werden nach Bedarf Chlorgas 8 und/oder anderes sauerstoffarmes Gas 9 zugeführt. Das von den Schwermetallen weitgehend befreite feste Produkt 5 ist ein phosphorhaltiger Ausgangsstoff für die Herstellung von P-Düngemitteln.

## Patentansprüche

1. Verfahren zur Abtrennung von Schwermetallen aus phosphorhaltiger Klärschlammasche, die auf eine Temperatur oberhalb der Siedepunkte der Oxichloride oder Chloride der zu entfernenden Schwermetalle erwärmt wird, **dadurch gekennzeichnet, dass** die erwärmte Klärschlammasche mit einer Chlorgas enthaltenden, sauerstoffarmen Atmosphäre, in der das Volumenverhältnis von Cl₂ zu O₂ im Bereich zwischen 3:1 und 10:1 liegt, in Kontakt gebracht wird und die sich bildenden gasförmigen Oxichloride oder Chloride der Schwermetalle getrennt von der Klärschlammasche aufgefangen werden.

2. Verfahren nach Anspruch 1, **dadurch gekennzeichnet, dass** das Volumenverhältnis von Cl₂ zu O₂ in der Atmosphäre bei 5:1 liegt.

3. Verfahren nach Anspruch 1 oder 2, **dadurch gekennzeichnet, dass** die Chlorgas enthaltende Atmosphäre zusätzlich andere Gase aufweist.

4. Verfahren nach Anspruch 3, **dadurch gekennzeichnet, dass** durch Variation des Cl₂/O₂-Verhältnisses und/oder der zusätzlichen Gase in der chlorhaltigen Atmosphäre die Schwermetalle selektiv entfernt werden.

5. Verfahren nach einem der Ansprüche 1 bis 4, **dadurch gekennzeichnet, dass** Alkali- und/oder Erdalkalicarbonate und/oder Alkali- und/oder Erdalkalioxide der Klärschlammasche vor bzw. während der thermochemischen Behandlung als feste Zuschlagstoffe zugeführt werden.

6. Verfahren nach einem der Ansprüche 1 bis 5 **dadurch gekennzeichnet, dass** die Abtrennung der Schwermetalle unmittelbar anschließend an die Verbrennung des Klärschlamms erfolgt.

7. Verfahren nach einem der Ansprüche 1 bis 6 **dadurch gekennzeichnet, dass** die Erwärmung der Klärschlammasche auf Temperaturen >850°C erfolgt.

8. Verfahren nach einem der Ansprüche 1 bis 7, **dadurch gekennzeichnet, dass** die Behandlung in einem Ofenaggregat durchgeführt wird.

9. Verwendung der nach dem Verfahren nach einem der Ansprüche 1 bis 8 behandelten Klärschlammasche als Phosphordüngemittel.

## Claims

1. A method of separating heavy metals from phosphorus-containing sewage-sludge ash which is heated to a temperature above the boiling point of the oxychlorides or chlorides of the heavy metals to be removed, **characterized in that** the heated sewage-sludge ash is brought into contact with an oxygen-lean atmosphere which contains chlorine gas and in which the volume ratio of Cl₂ to O₂ is in the range of between 3 : 1 and 10 : 1, and the gaseous oxychlorides or chlorides of the heavy metals which are formed are collected separately from the sewage-sludge ash.

2. A method according to Claim 1, **characterized in that** the volume ratio of Cl₂ to O₂ in the atmosphere is 5 : 1.

3. A method according to Claim 1 or 2, **characterized in that** the atmosphere which contains chlorine gas additionally has other gases.

4. A method according to Claim 3, **characterized in that** the heavy metals are removed in a selective manner by variation of the Cl₂ / O₂ ratio and/or of the additional gases in the chlorine-containing atmosphere.

5. A method according to any one of Claims 1 to 4, **characterized in that** alkali carbonates and/or alkaline-earth carbonates and/or alkali oxides and/or alkaline-earth oxides of the sewage-sludge ash are supplied in the form of solid additives before or during the thermochemical treatment.

6. A method according to any one of Claims 1 to 5, **characterized in that** the separation of the heavy metals takes place immediately following the combustion of the sewage sludge.

7. A method according to any one of Claims 1 to 6, **characterized in that** the heating of the sewage-sludge ash takes place at temperatures of > 850°C.

8. A method according to any one of Claims 1 to 7, **characterized in that** the treatment is carried out in a furnace unit.

9. Use of the sewage-sludge ash treated in accordance with the method according to any one of Claims 1 to 8 as a phosphorus fertilizer.

## Revendications

1. Procédé de séparation de métaux lourds à partir de cendres de boues d'épuration contenant du phosphore qui sont chauffées à une température supérieure aux points d'ébullition des oxychlorures ou chlorures des métaux lourds à éliminer, **caractérisé en ce que** les cendres de boues d'épuration chauffées sont mises en contact avec une atmosphère pauvre en oxygène et contenant du chlore gazeux dans laquelle le rapport en volume du Cl₂ sur l'O₂ se situe dans la plage de 3:1 à 10:1 1 et les oxychlorures ou chlorures gazeux des métaux lourds qui se forment sont captés séparément des cendres de boues d'épuration.

2. Procédé selon la revendication 1, **caractérisé en ce que** le rapport en volume du Cl₂ sur l'O₂ dans l'atmosphère est de 5:1.

3. Procédé selon la revendication 1 ou la revendication 2, **caractérisé en ce que** l'atmosphère contenant du chlore gaz comprend en plus d'autres gaz.

4. Procédé selon la revendication 3, **caractérisé en ce que** les métaux lourds sont éliminés sélectivement en faisant varier le rapport Cl₂/O₂ et/ou lesdits autres gaz dans l'atmosphère contenant du chlore.

5. Procédé selon l'une des revendications 1 à 4, **caractérisé en ce que** des carbonates de métaux alcalins et/ou alcalino-terreux et/ou des oxydes de métaux alcalins et/ou alcalino-terreux sont introduits dans les cendres de boues d'épuration sous forme d'additifs solides avant ou pendant le traitement thermochimique.

6. Procédé selon l'une des revendications 1 à 5, **caractérisé en ce que** la séparation des métaux lourds se fait immédiatement à la suite de la combustion des boues d'épuration.

7. Procédé selon l'une des revendications 1 à 6, **caractérisé en ce que** les cendres de boues d'épuration sont chauffées à des températures supérieures à 850°C.

8. Procédé selon l'une des revendications 1 à 7, **caractérisé en ce que** le traitement s'effectue dans une installation de four.

9. Utilisation des cendres de boues d'épuration traitées par le procédé selon l'une des revendications 1 à 8 comme engrais phosphoré.
